## Europäisches Patentamt

## European Patent Office

## Office européen des brevets

(19)

(11) Veröffentlichungsnummer: **0 199 010**
**B1**

(12) **EUROPÄISCHE PATENTSCHRIFT**

(45) Veröffentlichungstag der Patentschrift:
**18.07.90**

(51) Int. Cl.⁵: **B62D 35/00**

(21) Anmeldenummer: **86102107.9**

(22) Anmeldetag: **18.02.86**

(54) Aerodynamische Vorrichtung für einen Personenwagen.

(30) Priorität: **24.04.85 DE 3514790**

(43) Veröffentlichungstag der Anmeldung:
**29.10.86 Patentblatt 86/44**

(45) Bekanntmachung des Hinweises auf die Patenterteilung:
**18.07.90 Patentblatt 90/29**

(84) Benannte Vertragsstaaten:
**DE FR GB IT**

(56) Entgegenhaltungen:
**DE-A- 2 737 638**
**DE-A- 2 748 874**
**DE-A- 3 132 369**

(73) Patentinhaber: **Dr.Ing.h.c. F. Porsche Aktiengesellschaft, Porschestrasse 42, D-7000 Stuttgart 40(DE)**

(72) Erfinder: **Kretschmer, Helmut, Dipl.-Ing. FH, Höhenstrasse 18, D-8752 Waldaschaff(DE)**

**Beschreibung**

Die Erfindung bezieht sich auf eine aerodynamische Vorrichtung für einen Personenwagen, die im hinteren Bereich eines Fließhecks, Stufenhecks oder Fließ-Stufenhecks angeordnet ist und aus einem Leitelement und einem die Form eines Tragflächenprofils aufweisenden Flügel besteht, wobei der Flügel und das Leitelement in der Höhe mit Abstand zueinander verlaufen und an der aerodynamischen Vorrichtung ein düsenförmiger Spalt vorgesehen ist.

Eine bekannte aerodynamische Vorrichtung (DE-OS 31 32 369) an einem mit einem Fließstufenheck versehenen Personenwagen besteht aus einem an der Heckklappe befestigten Leitelement (Spoiler) und einem das Heck überspannenden Flügel, wobei der Flügel gegenüber dem Leitelement nach vorne und oben versetzt angeordnet ist.

Der Flügel dient bei dieser Anordnung dazu, eine Strömungsablösung und damit ein Totwassergebiet vor dem Leitelement zu vermeiden. Dies geschieht im wesentlichen durch eine Kontraktion der Strömung zwischen der runden Flügelvorderkante und der Heckoberseite. Zur Erzielung nennenswerter Abtriebskräfte erscheint dieser Flügel aufgrund seiner geringen Längserstreckung (etwa halbe Spoilerlänge) nur bedingt geeignet.

Ein reduzierter Luftwiderstandsbeiwert und eine Erhöhung des Abtriebes an der Hinterachse wird bei dieser Anordnung lediglich durch das Leitelement erzielt. Außerdem haftet ihr der Nachteil an, daß durch den relativ hoch liegenden und nach vorne versetzten Flügel die freie Durchsicht aus dem Fahrzeug nach hinten beeinträchtigt wird. Ferner bilden der Flügel und das Leitelement ein großflächiges Bauteil, zu dessen Herstellung aufwendige und kostenintensive Werkzeuge erforderlich sind.

Auch muß zur Erzielung eines gewünschten Abtriebes das Leitelement relativ hoch am Heck angeordnet sein, was jedoch dazu führt, daß ein vergrößertes Totwassergebiet am Heck entsteht. mit der Folge, daß der Luftwiderstandbeiwert erhöht wird.

Darüber hinaus ist festzustellen, daß bei einem Spoiler nur die Oberseite zur Abtriebserzeugung nutzbar ist.

Aufgabe der Erfindung ist es, eine im Heckbereich eines Personenwagens vorgesehene aerodynamische Vorrichtung so zu gestalten, daß einerseits bei niedriger Bauhöhe eine gute Durchsicht nach hinten gewährleistet ist und daß andererseits neben einer Verringerung des Gesamtluftwiderstandes gleichzeitig ein wirkungsvoller Abtrieb an der Hinterachse erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die erfindungsgemäße Anordnung und Ausbildung des Flügels und des Leitelementes eine aerodynamische Vorrichtung geschaffen ist, die bei guter Durchsicht nach hinten eine kompakte Bauweise (niedrige Bauhöhe) aufweist und mit der das Verhältnis Auftrieb zu Luftwiderstandsbeiwert (CA/CW) wesentlich verbessert wird.

Durch den gegenüber der Heckoberseite angestellten Flügel und das kurze darunterliegende Leitelement wird sowohl an der Flügeloberseite als auch an der Flügelunterseite ein Abtrieb erzielt. Durch den relativ geringen Abstand des Heckflügels von der Heckoberseite wird ein Teil der Strömungsverzögerung auch auf der Heckoberseite wirksam, was zu einer zusätzlichen Erhöhung des Hinterachsabtriebs und einer Luftwiderstandsreduktion führt.

Ferner wird durch die Umlenkung der Strömung mittels des Leitelements bei gleichzeitiger Beschleunigung der Strömung im düsenförmigen Spalt zwischen Leitelement und Flügelunterseite die Strömung, auch bei großen Anstellwinkeln des Flügels, an der konvex gekrümmten Flügelunterseite zum Anliegen gebracht. Dadurch vergrößert sich die Abtriebskraft am Flügel. Außerdem wird durch die im düsenförmigen Spalt beschleunigte Strömung die charakteristische Höhe des Totwassergebietes im Heck reduziert. Dies erfolgt dadurch, daß die energiereiche Düsenströmung aufgrund von Scherkräften Teile von energiearmer Strömung des Totwassergebietes nach hinten hin mitreißt und somit das Totwassergebiet verkleinert (Entrainment-Effekt), was wiederum eine Luftwiderstandsreduktion zur Folge hat.

Ein Ausführungsbeispiel der Erfindung ist in der Zeichnung dargestellt und wird im folgenden näher erläutert.
Es zeigt

Fig. 1 eine Schrägansicht von hinten auf einen Personenwagen mit einer am Heck angeordneten aerodynamischen Vorrichtung,
Fig. 2 eine Seitenansicht des Personenwagens mit der erfindungsgemäßen aerodynamischen Vorrichtung, teilweise im Schnitt,
Fig. 3 eine Einzelheit der Fig. 2 in größerem Maßstab,
Fig. 4 eine Draufsicht auf die aerodynamische Vorrichtung,
Fig. 5 eine um 90° gedrehte Ansicht entsprechend Fig. 2 einer aerodynamischen Vorrichtung, jedoch für ein Stufenheckfahrzeug,
Fig. 6 eine Ansicht entsprechend Fig. 2 einer aerodynamischen Vorrichtung, jedoch für ein Fließstufenheckfahrzeug.

Ein Personenwagen 1 umfaßt im dargestellten Bereich einen Aufbau 2 mit einer schwenkbaren Klappe 3, die an ihrer Oberseite über nicht gezeigte Scharniere an einem angrenzenden Dach 4 angelenkt ist. Die Klappe 3 wird gebildet durch eine Heckscheibe 5 und einen Rahmen 6, der die Heckscheibe 5 umlaufend umgibt.

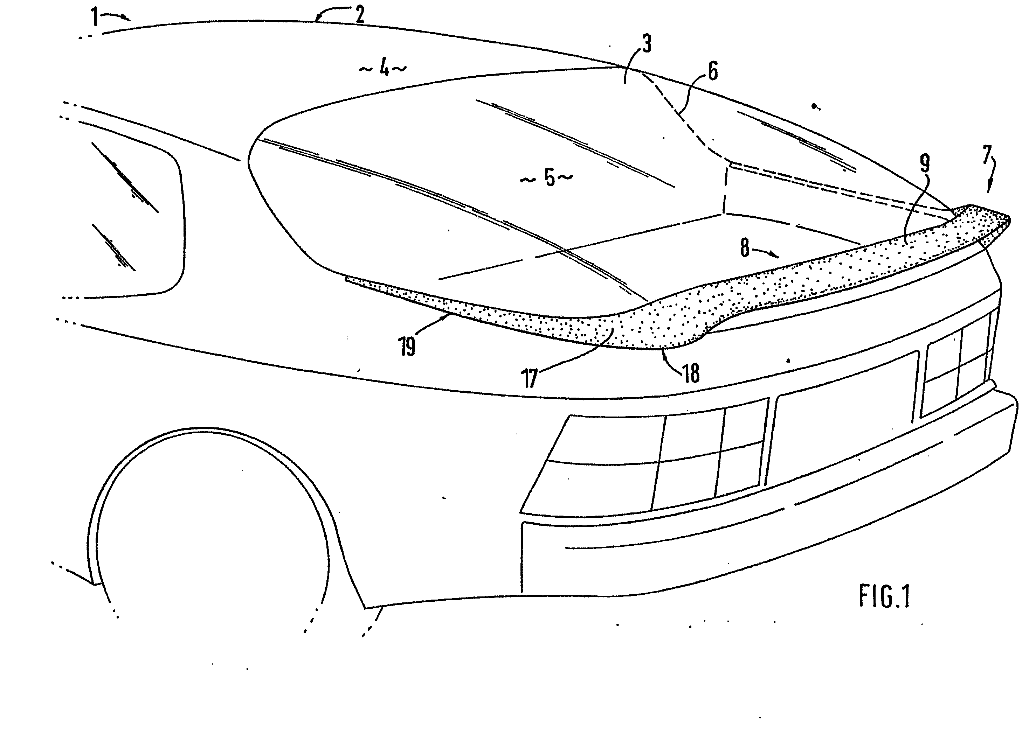

Die Heckscheibe 5 weist im Längsschnitt gesehen einen solchen Neigungswinkel auf, daß eine ablösungsfreie Dachhinterkantenab- und Heckscheibenüberströmung sichergestellt ist. Gemäß den Fig. 1 bis 4 ist in einem hinteren Bereich 7 des fließheckartig ausgebildeten Personenwagens 1 eine aerodynamische Vorrichtung 8 vorgesehen, mittels der der Luftwiderstand des Fahrzeuges herabgesetzt und zugleich der dynamische Raddruck (Abtrieb) an der Hinterachse beim Fahren verbessert wird.

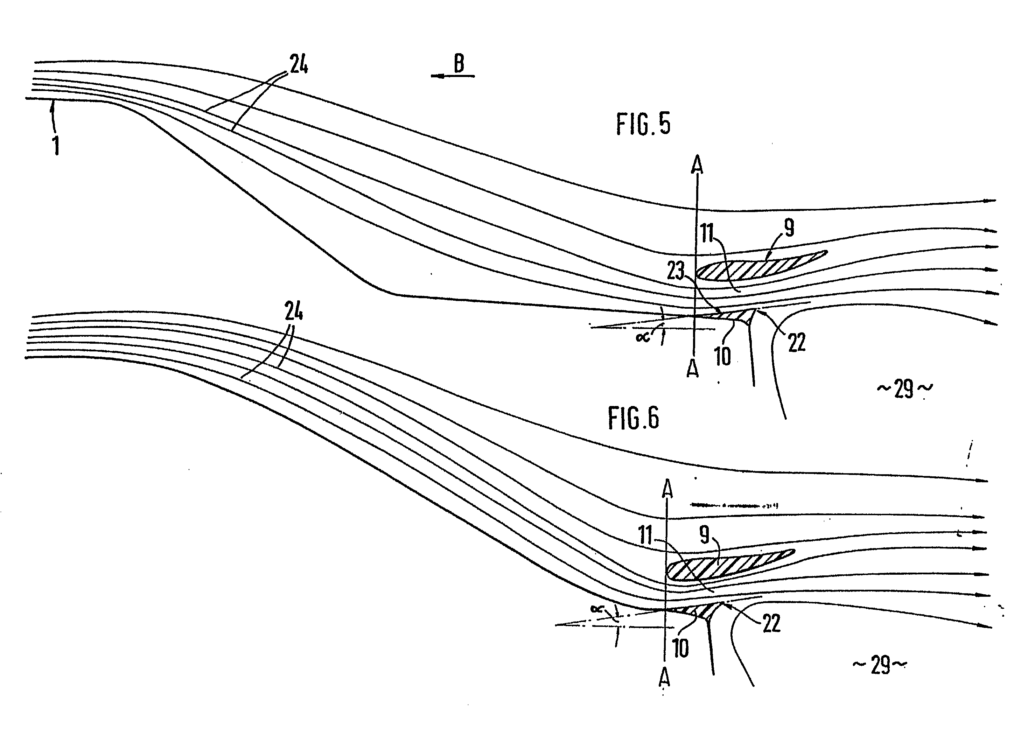

Die aerodynamische Vorrichtung 8 setzt sich aus einem Flügel 9 und einem darunterliegend angeordneten Leitelement 10 zusammen, die miteinander einen düsenförmigen Spalt 11 bilden. Eine Eintrittsöffnung 12 des Spaltes 11 liegt hierbei in einer vertikal verlaufenden Ebene A-A, d. h., die Vorderkanten 13, 14 des Flügels 9 und des Leitelementes 10 sind in der Draufsicht gesehen, etwa deckungsgleich ausgebildet (Fig. 4). Die Vorderkanten 13, 14 können gemäß Fig. 4 entweder geradlinig verlaufen oder aber einen gebogenen Formverlauf aufweisen (strichpunktiert dargestellt).

Der die Heckscheibe überspannende Flügel 9 weist im Querschnitt die Form eines Tragflächenprofils auf, dessen Unterseite 15 konvex gekrümmt ist und dessen vorderes Ende mit einer Nasenrundung 16 versehen ist. Der Flügel 9 ist in einem nicht abgelösten Strömungsbereich des Hecks - die Strömung liegt an - angeordnet und erstreckt sich über einen wesentlichen Teil der Breite des Personenwagens. Gemäß Fig. 1 ist der Flügel 9 mit dem Leitelement 10 über seitlich außenliegende Stege 17 zu einer Baueinheit 18 verbunden, wobei die Stege 17 unter stetiger Querschnittsverringerung nach unten und nach vorne entlang von seitlichen Schenkeln 19 des Rahmens 6 gezogen sind. Die Baueinheit 18 ist in geeigneter Weise am Heck bzw. an der Klappe 3 befestigt.

Es besteht aber auch die Möglichkeit, daß die Stege 17 durch vertikal verlaufende Wandabschnitte 20 gebildet werden, die den obenliegenden Flügel 9 mit dem darunterliegenden Leitelement 10 verbinden. Wie Fig. 4 zeigt, können anstelle der Stege 17, aber auch versetzt zu den Außenseiten 21 verlaufende Stege 17' (strichpunktiert dargestellt) vorgesehen sein bzw. es kann in einem mittleren Bereich der aerodynamischen Vorrichtung 8 ein Steg 17" angeordnet sein.

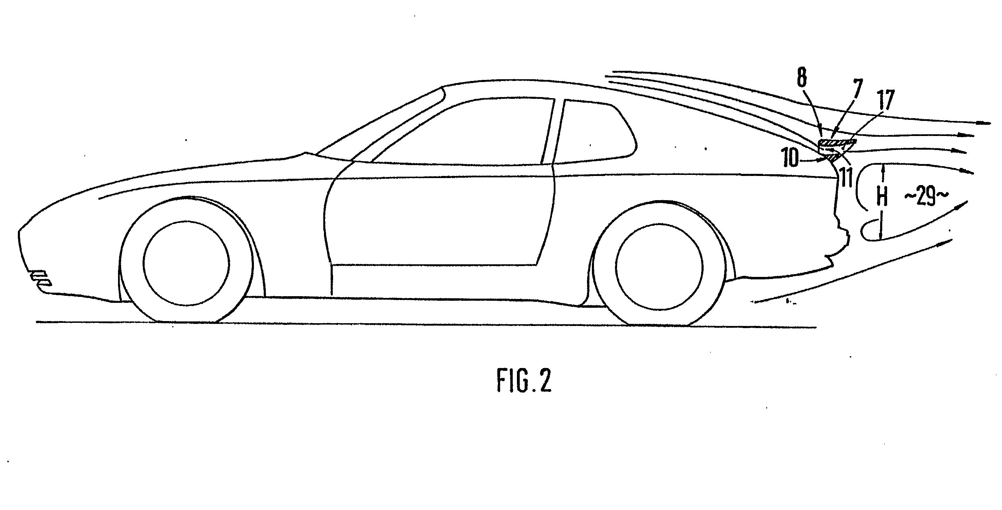

Das Leitelement 10 weist eine wesentlich geringere Länge $L_1$ auf als die Länge $L_2$ des Flügels 9, dergestalt, daß eine scharfkantig ausgebildete, hintere Abrißkante 22 des Leitelementes 10 etwa bei 1/3 bis 1/2 der Länge $L_2$ des Flügels 9 angeordnet ist. Gemäß Fig. 2 weist das Leitelement 10 im Querschnitt etwa die Form eines Dreiecks auf, wobei eine Oberseite 23 des Leitelementes 10 zumindest in einem Bereich C etwa parallel zur darüberliegenden Unterseite 15 des Flügels 9 verläuft.

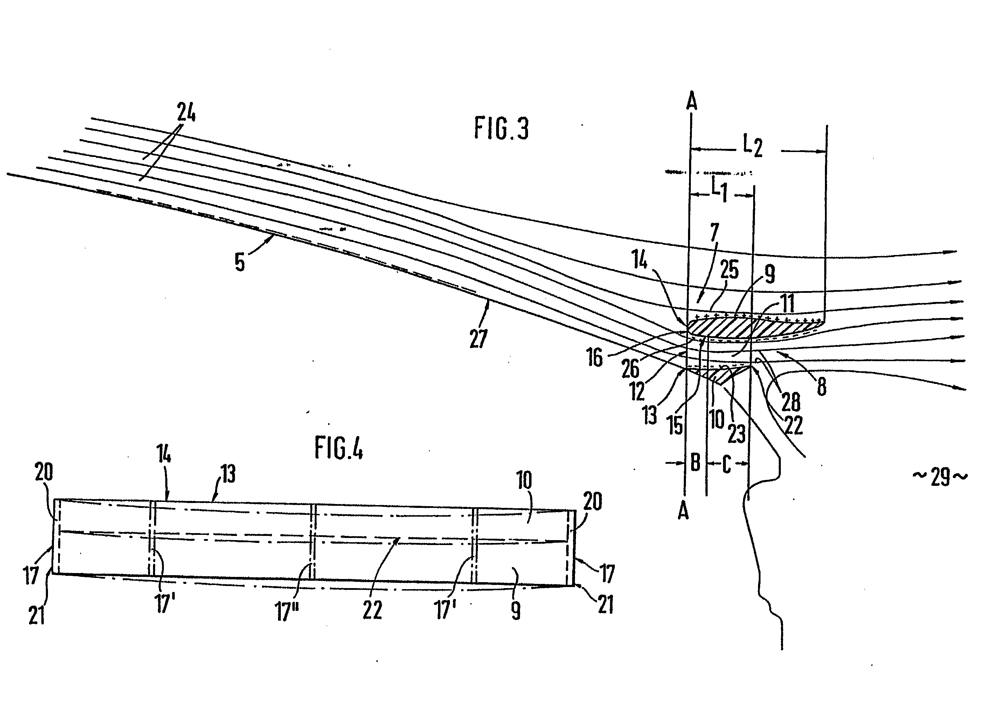

Der düsenförmige Spalt 11 zwischen Flügel 9 und Leitelement 10 erstreckt sich über die gesamte Breite der Baueinheit 18 und weist im wesentlichen einen konstanten Querschnitt auf. Im Längsschnitt gesehen (Fig. 3) besitzt der düsenförmige Spalt 11 im Bereich der vertikal verlaufenden Ebene A-A seinen größten Querschnitt, der sich in einem anschließenden Bereich B stetig verringert, wogegen der Querschnitt im nachfolgenden Bereich C etwa gleichbleibend ist. Sowohl das Leitelement 10 als auch der Flügel 9 ragen abschnittsweise über das hintere Ende der Heckklappe 3 hinaus.

Es besteht aber auch die Möglichkeit, daß das Leitelement 10 durch ein separates Bauteil gebildet wird, das auf die Ober seite des Hecks aufgesetzt und in herkömmlicher Weise daran befestigt ist.

Bei einem Personenwagen mit einem Stufenheck (Fig. 5) bzw. einem Fließstufenheck (Fig. 6) ist es aber auch denkbar, daß das Leitelement 10 durch einen etwa parallel zur Flügelunterseite verlaufenden Wandabschnitt des Hecks gebildet wird, d. h., das Leitelement 10 ist in den Aufbau integriert (nicht dargestellt).

Je nach Heckform beträgt die lichte Höhe des Spaltes in einem Bereich C etwa 35 bis 100 mm, wobei sich für den in Fig. 1 dargestellten Personenwagen eine Spalthöhe von ca. 40 mm bei einer Flügellänge von 180 mm als besonders günstig erwiesen hat. Bei einer Spalthöhe ≤ 35 mm ist eine angestrebte Funktion der aerodynamischen Vorrichtung nicht mehr gegeben. Das Verhältnis Spalthöhe zu Flügellänge beträgt etwa 1 : 2 bis 1 : 5, je nach Heckscheibenneigung des Personenwagens.

Die Anstellung des Flügels 9 und des Leitelements 10 zur Heckscheibenüberströmung ist von Fahrzeug zu Fahrzeug verschieden und kann empirisch durch Messungen im Windkanal ermittelt werden. Gemäß Fig. 3 ist die Oberseite 23 des Leitelementes 10 etwa horizontal ausgerichtet. Nach den Fig. 5 und 6 verläuft die Oberseite 23 des Leitelementes 10 im spitzen Winkel α zu einer Horizontalen, dergestalt, daß sie entgegen der Fahrtrichtung B ansteigt.

Im Fahrbetrieb des Personenwagens wird der die Heckscheibe 5 ablösungsfrei passierende Luftstrom 24 durch den angestellten Flügel 9 in eine Flügelüberströmung 25 und eine Flügelunterströmung 26 aufgeteilt. Durch die Anstellung des Flügels 9 gegenüber der Hecküberströmung 24 wird die Strömungsgeschwindigkeit auf der Flügeloberseite reduziert und auf der Flügelunterseite 15 beschleunigt, wodurch eine Abtriebskraft erzeugt wird, und zwar auf beiden Seiten des Flügels 9. Auf der Oberseite des Flügels 9 entsteht, bedingt durch die Strömungsverzögerung, ein Überdruckgebiet, was abtriebserzeugend wirkt, wogegen an der Unterseite 15 des Flügels 9 ein gegenüber der angrenzenden Heckoberseite 27 vergrößerter Unterdruck auftritt, der ebenfalls abtriebserzeugend wirkt. Durch das Leitelement 10 wird eine ablösungsfreie Umströmung der gesamten Flügelunterseite 15 gewährleistet. Ferner wird durch den im düsenförmigen Spalt beschleunigten Luftstrom 28 eine Redukion der charakteristischen Höhe H des Totwassergebiets 29 am Heck erreicht. Dies erfolgt dadurch, daß der energiereiche Luftstrom 28 aufgrund von Scherkräften Teile von energiearmer Strömung des Totwassergebietes 29 mitreißt und somit das Totwassergebiet 29 verkleinert (Entrainment-Effekt), was gleichbedeutend mit einer Luftwiderstandsreduktion ist.

Durch die Anordnung und Ausgestaltung des Leitelementes 10 wird eine Umlenkung des Luftstromes 26 erreicht. Im Bereich der Eintrittsöffnung 12 des düsenförmiges Spaltes 11 entsteht durch die Umlenkung an der Oberseite des Leitelementes 10 ein positives Druckgebiet (relativer Überdruck),

das am und kurz vor dem Leitelement 10 eine Abtriebskraft und eine Luftwiderstandsreduzierung bewirkt. Die Umlenkung des Luftstromes 24 durch den Flügel 9 und das Leitelement 10 hat zur Folge, daß im davorliegenden Bereich der Heckoberseite ein relativer Überdruck induziert wird (Vorstaueffekt).

Die Reduktion der Hecktotwasserhöhe H wird um so effektiver, je energiereicher die Unterbodenströmung ist, was insbesondere bei einem glattflächigen Unterboden der Fall ist. Zwischen der nach oben wegströmenden Luftschicht 30 des Unterbodens und dem Hecktotwasser 29 tritt dann der gleiche Effekt auf wie im oberen Bereich der aerodynamischen Vorrichtung 8.

## Patentansprüche

1. Aerodynamische Vorrichtung (8) für einen Personenwagen, die im hinteren Bereich eines Fließhecks, Stufenhecks oder Fließ-Stufenhecks angeordnet ist und aus einem Leitelement (10) und einem die Form eines Tragflächenprofils aufweisenden Flügel besteht, wobei der Flügel (9) und das Leitelement in der Höhe mit Abstand zueinander verlaufen und an der aerodynamischen Vorrichtung ein düsenförmiger Spalt (11) vorgesehen ist, dadurch gekennzeichnet, daß der düsenförmige Spalt (11) vom Flügel (9) und dem darunterliegenden Leitelement (10) gebildet wird und eine auf einer vertikal verlaufenden Ebene (A-A) liegende Eintrittsöffnung (12) aufweist und daß eine hintere Abrißkante (22) des Leitelementes (10) bei etwa 1/3 bis 1/2 der Länge (L₂) des Flügels (9) angeordnet ist.

2. Aerodynamische Vorrichtung nach Anspruch 1, dadurch gekennzeichnet, daß die Vorderkanten (13, 14) von Flügel (9) und Leitelement (10) in der Draufsicht gesehen, deckungsgleich ausgebildet sind.

3. Aerodynamische Vorrichtung nach Anspruch 1, dadurch gekennzeichnet, daß der Flügel (9) mit dem Leitelement (10) über seitlich außenliegende Stege (17) zu einer Baueinheit (18) verbunden ist.

4. Aerodynamische Vorrichtung nach Anspruch 1, dadurch gekennzeichnet, daß das Leitelement (10) durch ein separates Bauteil gebildet wird, das auf die Oberseite des Hecks aufgesetzt und daran befestigt ist.

5. Aerodynamische Vorrichtung nach Anspruch 1, dadurch gekennzeichnet, daß das Leitelement (10) durch einen etwa parallel zu einer Unterseite (15) des Flügels (9) verlaufenden Wandabschnitt des Hecks gebildet wird.

6. Aerodynamische Vorrichtung nach Anspruch 1, dadurch gekennzeichnet, daß der düsenförmige Spalt (11) im Bereich der vertikal verlaufenden Ebene (A-A) seinen größten Querschnitt aufweist, der sich anschließend in einem Bereich (B) einer vorderen Nasenrundung (16) des Flügels (9) stetig verringert, wogegen der Querschnitt in einem nachfolgenden Bereich (C) etwa konstant ist.

7. Aerodynamische Vorrichtung nach Anspruch 6, dadurch gekennzeichnet, daß eine Oberseite (23) des Leitelements (10) zumindest in einem Bereich (C) etwa parallel zu einem darüberliegenden Abschnitt der Flügelunterseite (15) verläuft.

8. Aerodynamische Vorrichtung nach den Ansprüchen 1 und 6, wobei das Fließheck des Personenwagens durch eine mit einer Heckscheibe versehene, schwenkbare Klappe dargestellt ist, dadurch gekennzeichnet, daß der Flügel (9) und das Leitelement (10) an der Klappe (3) angeordnet sind und daß die Oberseite (23) des Leitelementes (10) und der Flügel (9) gegenüber der Heckscheibenneigung angestellt sind.

9. Aerodynamische Vorrichtung nach Anspruch 8, dadurch gekennzeichnet, daß sowohl das Leitelement (10) als auch der Flügel (9) abschnittsweise über die Klappe (9) hinausragen.

10) Aerodynamische Vorrichtung nach Anspruch 1, dadurch gekennzeichnet, daß der Spalt (11) zwischen Flügel (9) und Leitelement (10) über die gesamte Quererstreckung der aerodynamischen Vorrichtung (8) im wesentlichen konstant ist.

11. Aerodynamische Vorrichtung nach den Ansprüchen 1 und 10 dadurch gekennzeichnet, daß die Höhe des Spaltes (11) in einem Bereich (B) gemessen, etwa 35 bis 100 mm beträgt.

12. Aerodynamische Vorrichtung nach Anspruch 1, dadurch gekennzeichnet, daß das Verhältnis Spalthöhe zu Flügellänge - je nach Heckscheibenneigung - etwa 1 : 2 bis 1 : 5 beträgt.

## Claims

1. An aerodynamic device (8) for a car, which is arranged in the rear area of a fastback, stepped back or a stepped fastback and comprises a guide element (10) and a wing (9) in the form of an aerofoil section, the wing and the guide element extending at a distance from each other vertically and a jet-shaped gap (11) being provided in the aerodynamic device, characterized in that the jet-shaped gap (11) is formed by the wing (9) and the guide element (10) lying thereunder and has an inlet opening (12) lying on a vertically extending plane (A-A), and a rear breakaway edge (22) of the guide element (10) is arranged at approximately 1/3 to 1/2 of the length (L₂) of the wing (9).

2. An aerodynamic device according to Claim 1, characterized in that the front edges (13, 14) of the wing (9) and the guide element (10) are aligned, as seen in plan view.

3. An aerodynamic device according to Claim 1, characterized in that the wing (9) is connected to the guide element (10) by way of lateral, external webs (17) to form a structural unit (18).

4. An aerodynamic device according to Claim 1, characterized in that the guide element (10) is formed by a separate component mounted on the top of the rear [of the car] and secured thereto.

5. An aerodynamic device according to Claim 1, characterized in that the guide element (10) is formed by a wall portion of the rear [of the car] extending approximately parallel to an underside (15) of the wing (9).

6. An aerodynamic device according to Claim 1, characterized in that the jet-shaped gap (11) has its greatest cross-section in the region of the vertically extending plane (A–A), the said cross-section then continuously decreasing in an area (B) of a front nose rounding (16) of the wing (9), whereas the cross-section is approximately constant in a subsequent area (C).

7. An aerodynamic device according to Claim 6, characterized in that a top (23) of the guide element (10) extends, at least in an area (C), approximately parallel to a portion of the underside (15) of the wing lying thereabove.

8. An aerodynamic device according to Claims 1 and 6, the fastback of the car being constituted by a pivotable flap provided with a rear window, characterized in that the wing (9) and the guide element (10) are mounted on the flap (3), and the top (23) of the guide element (10) and the wing (9) are adapted to the inclination of the rear window.

9. An aerodynamic device according to Claim 8, characterized in that both the guide element (10) and the wing (9) project in part above the flap (9) [sic].

10. An aerodynamic device according to Claim 1, characterized in that the gap (11) between the wing (9) and the guide element (10) is substantially constant over the entire transverse extent of the aerodynamic device (8).

11. An aerodynamic device according to Claims 1 and 10, characterized in that the height of the gap (11), measured in an area (B), amounts to approximately 35 to 100 mm.

12. An aerodynamic device according to Claim 1, characterized in that the ratio of the height of the gap to the length of the wing – depending upon the inclination of the rear window – amounts to approximately 1:2 to 1:5.

## Revendications

1. Dispositif aérodynamique (8) pour un véhicule de tourisme, qui est placé dans la zone d'un panneau d'écoulement arrière, à décrochement ou mixte, et se compose d'un aileron (9) présentant la forme d'un profil de surface portante et d'un becquet (10), l'aileron (9) et le becquet (10) s'étendant en étant espacés entre eux en hauteur, et une fente en forme de tuyère (11) étant prévue sur ce dispositif, caractérisé en ce que cette fente en forme de tuyère (11) est formée au moyen de l'aileron (9) et du becquet (10) se trouvant en dessous et présente une ouverture d'admission (12) se situant dans un plan vertical (A-A) et en ce qu'un bord de décollage arrière (22) du becquet (10) est placé aux environs du tiers ou de la moitié de la longueur ($L_2$) de l'aileron (9).

2. Dispositif aérodynamique selon la revendication 1, caractérisé en ce que les bords d'attaque (13, 14) de l'aileron (9) et du becquet (10) vus du dessus sont exactement superposés.

3. Dispositif aérodynamique selon la revendication 1, caractérisé en ce que l'aileron (9) est relié au becquet (10) au moyen d'entretoises (17) latéralement extérieures de façon à former une unité de construction (18).

4. Dispositif aérodynamique selon la revendication 1, caractérisé en ce que le becquet (10) est formé d'un élément séparé qui est mis en place à la partie supérieure de l'arrière et y est fixé.

5. Dispositif aérodynamique selon la revendication 1, caractérisé en ce que le becquet (10) est formé par une section de paroi de l'arrière, s'étendant à peu près parallèlement au côté inférieur (15) de l'aileron (9).

6. Dispositif aérodynamique selon la revendication 1, caractérisé en ce que la fente en forme de tuyère (11) comporte dans la zone du plan vertical (A-A) sa section la plus forte qui va ensuite diminuer progressivement pour devenir une zone (B) arrondie du bord d'attaque, tandis qu'au contraire, la section reste pratiquement constante dans une zone suivante (C).

7. Dispositif aérodynamique selon la revendication 6, caractérisé en ce qu'une face supérieure (23) du becquet (10) s'étend au moins dans une zone (C) à peu près parallèlement à une section de la face inférieure de l'aileron (9) placée au dessus.

8. Dispositif aérodynamique selon les revendications 1 et 6, le panneau d'écoulement arrière du véhicule de tourisme étant formé par un capot basculant (3) muni d'une lunette arrière, caractérisé en ce que l'aileron (9) et le becquet (10) sont placés sur le capot (3) et en ce que la face supérieure (23) du becquet (10) et de l'aileron (9) sont inclinées en sens inverse à la lunette arrière.

9. Dispositif aérodynamique selon la revendication 8, caractérisé en ce qu'aussi bien le becquet (10) que l'aileron (9) dépassent par sections au dessus du capot (3).

10. Dispositif aérodynamique selon la revendication 1, caractérisé en ce que la fente (11) entre l'aileron (9) et le becquet (10) est pratiquement constante sur la totalité du déploiement transversal du dispositif aérodynamique (8).

11. Dispositif aérodynamique selon les revendications 1 et 10, caractérisé en ce que la hauteur de la fente (11) mesurée dans une zone (B) va d'environ 35 à 100 mm.

12. Dispositif aérodynamique selon la revendication 1, caractérisé en ce que le rapport de la hauteur de la fente à la longueur de l'aileron selon l'inclinaison de la lunette arrière - va de 1:2 à 1:5 est pratiquement constante sur la totalité du déploiement transversal du dispositif aérodynamique (8).

FIG.1

EP 0 199 010 B1

FIG.2

EP 0 199 010 B1

FIG.3

24

5

27

A

$L_2$

$L_1$

7

14

25

9

11

16

26

8

12

28

13

15

10

23

22

A

B

C

FIG.4

20

14

13

10

20

17

17

21

17'

17''

22

17'

9

21

EP 0 199 010 B1

~29~

FIG.5

FIG.6

~29~

~29~

EP 0 199 010 B1